Europäisches Patentamt

European Patent Office

Office européen des brevets

(19)

(11) Numéro de publication: **0 261 998 B1**

(12) **FASCICULE DE BREVET EUROPEEN**

(45) Date de publication du fascicule du brevet: **16.01.91**

(51) Int. Cl.⁵: **B 60 G 7/04, F 16 F 13/00**

(21) Numéro de dépôt: **87401419.4**

(22) Date de dépôt: **23.06.87**

(54) **Suspension de véhicule automobile à butée d'attaque hydraulique.**

(30) Priorité: **02.07.86 FR 8609937**

(43) Date de publication de la demande:
**30.03.88 Bulletin 88/13**

(45) Mention de la délivrance du brevet:
**16.01.91 Bulletin 91/03**

(84) Etats contractants désignés:
**DE GB IT**

(56) Documents cités:
**EP-A-0 148 060**
**DE-U-8 223 116**
**FR-A-1 497 839**
**FR-A-2 442 731**

(73) Titulaire: **AUTOMOBILES PEUGEOT**
**75, avenue de la Grande Armée**
**F-75116 Paris (FR)**
(73) Titulaire: **AUTOMOBILES CITROEN**
**62 Boulevard Victor-Hugo**
**F-92200 Neuilly-sur-Seine (FR)**

(72) Inventeur: **Richard, Denis**
**65, rue Mirabeau**
**F-94600 Choisy-Le-Roi (FR)**

(74) Mandataire: **Boivin, Claude**
**9, rue Edouard-Charton**
**F-78000 Versailles (FR)**

EP 0 261 998 B1

Courier Press, Leamington Spa, England.

# Description

La présente invention concerne une suspension de véhicule automobile comprenant, pour chaque roue, des moyens élastiques interposés entre un premier élément relié à la structure du véhicule et un deuxième élément relié à la fusée de roue, et des butées d'attaque et de détente pour limiter le déplacement du second élément par rapport au premier. Une suspension de ce genre est décrite notamment dans le brevet français FR—A—2.442.731.

Il y a avantage à ce que la raideur de la suspension croisse avec le débattement de l'essieu, de façon qu'elle soit très souple tout en permettant de grands débattements. Dans la suspension décrite dans le brevet français précité, ce résultat était obtenu en prévoyant deux butées d'attaque entrant en jeu successivement. Mais dans certains véhicules, il est difficile d'implanter deux butées d'attaque. Le document EP—A—0 148 060 décrit une suspension analogue dans laquelle la butée d'attaque est placée de manière à n'entrer en action qu'à partir d'une certaine course du deuxième élément par rapport au premier. Mais cette suspension n'est pas à raideur variable. La présente invention a pour objet une suspension du type ci-dessus qui ne comporte qu'une seule butée d'attaque qui est au contraire à raideur variable.

La suspension selon l'invention est caractérisée en ce que cette butée d'attaque est constituée par un corps creux en matériau élastomère, qui est plein de liquide, est fermée de manière étanche par une armature rigide et comporte un pion ou protubérance intérieure venant rencontrer l'armature après un certain écrasement de la butée, de sorte que la butée d'attaque est susceptible de travailler tout d'abord en extension, puis en compression.

Le pion intérieur peut être relié par des nervures à la face interne du corps creux. Lors de l'écrasement de la butée, ces nervures travaillent en extension et empêchent le pion de flamber.

On a décrit ci-après, à titre d'exemple non limitatif, un mode de réalisation de la suspension selon l'invention, avec référence aux dessins annexés dans lesquels:

La Figure 1 est un schéma de la suspension;

La Figure 2 est une vue en coupe axiale de la butée d'attaque;

La Figure 3 montre la variation de l'effort exercé sur une roue en fonction du débattement de l'essieu.

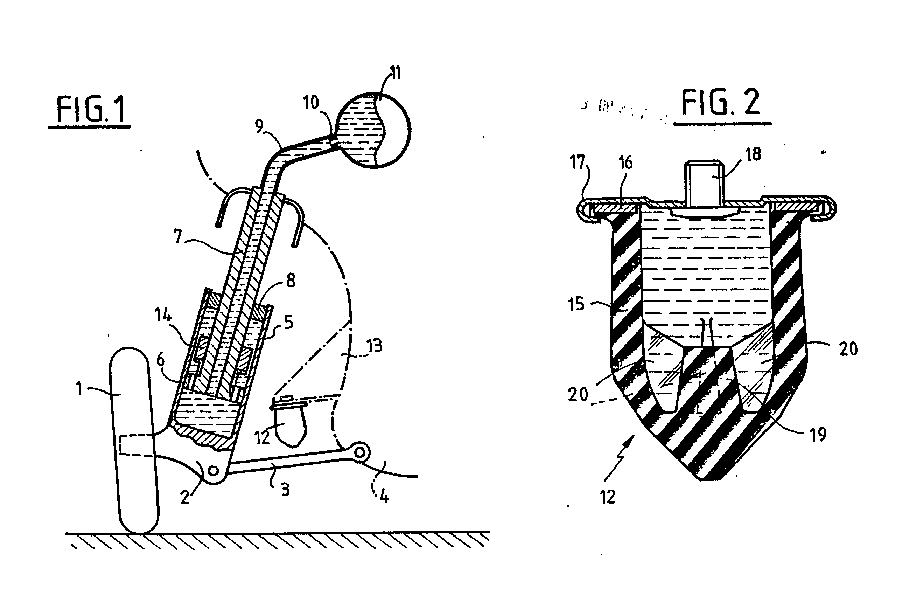

A la Figure 1, on voit une roue 1 qui est montée à rotation sur une fusée 2. Celle-ci est reliée par une bielle 3 à la structure 4 du véhicule et est solidaire d'un cylindre de suspension 5. Dans ce cylindre peut coulisser la partie cylindrique 6 d'un piston qui comprend en outre un tube 7 solidaire de la partie 6. Ce tube peut coulisser dans un palier 8 prévu à la partie supérieure du cylindre 5 et est monté dans la structure 4. Ce tube 7 est relié par un conduit 9 et un amortisseur 10 à un élément hydropneumatique 11 qui, de manière connue en soi, contient un gaz sous pression et un liquide, cet élément étant ainsi en communication avec le cylindre 5 par le conduit 9 et le tube 7. Le tube 7 et le conduit 9 sont montés sur la structure d'une manière compatible avec le débattement de la roue 1.

Une butée d'attaque 12, propre à être rencontrée par la bielle 3 lorsque le débattement de l'essieu atteint une valeur précisée plus loin, est fixée à la structure 4 par l'intermédiaire d'une console 13. Une butée de détente 14 est montée sur le tube 7 entre le piston 6 et le palier 8.

Comme on le voit plus particulièrement à la Figure 2, la butée d'attaque 12 comprend un corps creux 15 en caoutchouc dont une extrémité est fermée alors que son autre extrémité est adhérisée sur une rondelle métallique 16. Sur cette rondelle est sertie une armature 17 qui ferme de manière étanche le corps 15 et est munie en son centre d'une vis de fixation 18. Le corps 15 contient un liquide, formé par exemple de 20% d'eau et de 80% d'éthylène glycol et présente, à son extrémité opposée à l'armature 17, une protubérance axiale interne 19 qui est reliée par des nervures 20 à la face interne de la paroi du corps 15 et a ici une section axiale tronconique.

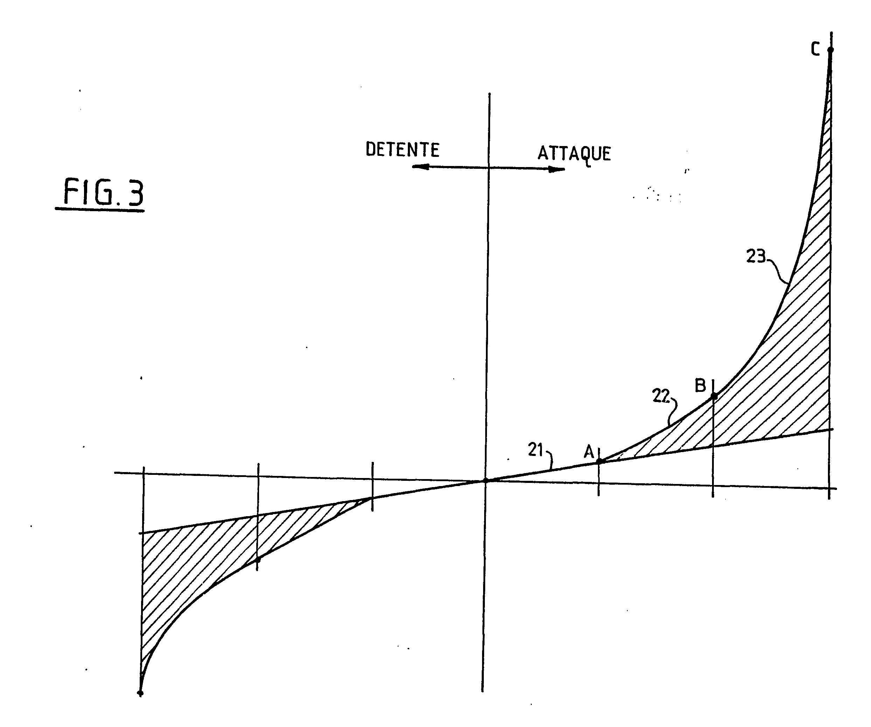

La Figure 3 montre l'effort exercé sur la roue 1 en fonction du débattement de l'essieu. Si l'on considère la course d'attaque l'effort est exercé uniquement par la compression de l'élément 11 depuis l'origine jusqu'au point A correspondant au tiers du débattement maximal possible; la courbe 21 représente la raideur de la suspension seule.

Au point A la butée 12 vient rencontrer la bielle 3. Si le débattement augmente, le corps de la butée 12 travaille en extension, le liquide qu'elle contient pressant sur ses parois; il en est de même de ses nervures 20. L'élasticité de la butée s'ajoute à celle de l'élément 11 et la raideur de l'ensemble est représentée par la courbe 22. Ce processus, pendant lequel la butée est relativement souple, se poursuit jusqu'à ce que la protubérance 19 rencontre la tête de la vis 18. Ceci se produit au point B et la protubérance est conformée de manière que cette rencontre ait lieu au deuxième tiers de la course de débattement.

Au-delà du point B, la protubérance 19 travaille à la compression et la raideur de l'ensemble suspension plus butée augmente notablement, comme le montre la courbe 23; la protubérance 19 est conformée et dimensionnée de manière que cette courbe 23 se raccorde tangentiellement à la courbe 22. Au point C la protubérance 19 est complétement comprimée et limite alors le débattement de l'essieu. Cela correspond à un effort égal à deux fois la charge nominale du véhicule.

La butée de détente 14 est également placée de manière à n'intervenir que pour un débattement correspondant au tiers de la course totale. Le débattement maximal est obtenu pour une charge égale à la charge normale.

## Revendications

1. Suspension de véhicule automobile comprenant, pour chaque roue, des moyens élastiques (11) interposés entre un premier élément (6—7) relié à la structure du véhicule et un deuxième élément (5) relié à la fusée de roue (2), et des butées d'attaque (12) et de détente (14) pour limiter le déplacement du second élément par rapport au premier, la butée d'attaque (12) étant placée de manière à n'entrer en action qu'à partir d'une certaine course du deuxième élément par rapport au premier, caractérisée en ce que cette butée d'attaque est constituée par un corps creux (15) en matériau élastomère, qui est plein de liquide, est fermée de manière étanche par une armature rigide (17—18) et comporte un pion ou protubérance intérieure (19) venant rencontrer l'armature après un certain écrasement de la butée, de sorte que la butée d'attaque est susceptible de travailler tout d'abord en extension, puis en compression.

2. Suspension de véhicule automobile selon la revendication 1,
caractérisée en ce que la butée (12) n'entre en action qu'après une course du deuxième élément par rapport au premier égale sensiblement au tiers de la course totale, travaille à l'extension pendant le deuxième tiers de la course, et en compression pendant le tiers de course restant.

3. Suspension de véhicule automobile selon la revendication 1 ou 2,
caractérisée en ce que le pion intérieur (19) est relié par des nervures (20) à la face interne du corps creux (15).

## Patentansprüche

1. Aufhängung für Kraftfahrzeuge, welche für jedes Rad ein zwischen einem ersten, mit dem Aufbau des Fahrzeugs verbundenen Element (6—7) und einem zweiten, mit dem Achszapfen (2) des Rades verbundenen Element (5) angeordnete elastische Einrichtung (11) aufweist, sowie einen Anschlagpuffer (12) und einen Sperranschlag (14) zur Begrenzung der Verschiebung des zweiten Elementes gegenüber dem ersten, wobei der Anschlagpuffer (12) in der Weise angeordnet ist, daß er erst nach einem bestimmten Hub des zweiten Elementes gegenüber dem ersten in Aktion tritt, dadurch gekennzeichnet, daß dieser Anschlagpuffer aus einem Hohlkörper (15) aus elastomerem Material besteht, der mit Flüssigkeit gefüllt, in abdichtender Weise durch eine starre Armatur (17—18) verschlossen ist und einen inneren Höcker oder Vorsprung (19) aufweist, der nach einer bestimmten Zusammendrückung des Anschlages auf die Armatur trifft, so daß der Anschlagpuffer erst durch Dehnung, dann durch Zusammendrückung verformt werden kann.

2. Aufhängung für Kraftfahrzeuge nach Anspruch 1, dadurch gekennzeichnet, daß der Anschlagpuffer (12) erst nach einem Hub des zweiten Elementes gegenüber dem ersten um etwa ein Drittel des gesamten Hubes in Aktion tritt, während des zweiten Drittel des Hubes durch Dehnung und während des restlichen Drittels des Hubes durch Zusammendrückung verformt wird.

3. Aufhängung für Kraftfahrzeuge nach Anspruch 1 oder 2, dadurch gekennzeichnet, daß der innere Höcker (19) durch Rippen (20) mit der Innenfläche des Hohlkörpers (15) verbunden ist.

## Claims

1. Motor vehicle suspension comprising, for each wheel, resilient means (11) inserted between a first element (6—7) connected to the structure of the vehicle and a second element (5) connected to the stub-axle of the wheel (2) and engagement (12) and expansion (14) stops for limiting the movement of the second element with respect to the first one, the engagement stop (12) being placed so as to enter into action only from a certain travel of the second element with respect to the first one, characterized in that this engagement stop is formed by a hollow elastomer material body (15) which is full of liquid, is closed sealingly by a rigid frame (17—18) and comprises an inner pin or protuberance (19) coming into contact with the frame after a certain crushing of the stop, so that the engagement stop is capable of working first of all under extension, then under compression.

2. Motor vehicle suspension according to claim 1, characterized in that the stop (12) only enters into action after travel of the second element with respect to the first one equal substantially to a third of the total travel, works under extension during the second third of the travel and under compression during the remaining third of travel.

3. Motor vehicle suspension according to claim 1 or 2, characterized in that the inner pin (19) is connected by ribs (20) to the internal face of the hollow body (15).

FIG. 2

FIG.1

FIG.3